# DEMANDE DE BREVET EUROPEEN

(11) **EP 3 150 074 A1**
(43) Date de publication de la demande: **05.04.2017**
(21) Numéro de dépôt: 16191001.3
(22) Date de dépôt: 28.09.2016
(51) Int. Cl.: A23L 17/00

(54) **PROCÉDÉ AMÉLIORÉ POUR LA FABRICATION DE TRANCHES DE POISSON**

(30) Priorité: 30.09.2015 FR 1559245
(71) Demandeur: DELABLI, 75008 Paris (FR)
(72) Inventeur: DUPEUX, Alexandra, 17610 CHERAC (FR)
(74) Mandataire: Gilbey, Vincent

(57) **Abrégé**

L'invention propose un procédé de fabrication d'un produit alimentaire à base de poisson, comprenant les étapes suivantes :
- (E1) réalisation d'une mêlée par découpe et mélange de matière à l'aide d'un outil de découpe,
- (E3) ajout de texturant et d'eau dans la mêlée, et mélange,
- (E5) insertion de la mêlée dans une gaine (2) au moyen d'un poussoir, la gaine (2) présentant une direction longitudinale définissant sa longueur, et formant ainsi des boudins de poisson,
- (E6) cuisson par pasteurisation des boudins de poisson.

## Description

### DOMAINE TECHNIQUE GENERAL

La présente invention concerne le domaine de l'industrie alimentaire, et plus particulièrement le domaine des produits à base de poisson, plus particulièrement de saumon.

### ETAT DE L'ART

Les produits à base de poisson, bien qu'appréciés des consommateurs à la fois pour leurs qualités gustatives et nutritives, sont communément présentés sous des formes qui s'avèrent peu pratiques à l'usage, en particulier chez les enfants.

Plusieurs nouveaux types de produits ont été proposés pour certains produits de la mer, notamment sous forme de bâtonnets, qui sont appréciés des consommateurs du fait de ce conditionnement, grâce auquel le produit est prêt à consommer, sans nécessiter de traitement préalable ou de précautions spécifiques.
Une telle présentation du produit atténue également l'odeur du produit initial, et supprime les écoulements d'eau que l'on observe généralement dans de tels produits à l'état naturel.

On recherche donc à proposer pour certains produits à base de poisson, et plus particulièrement à base de saumon ou encore à base de cabillaud, colin, flétan, thon ou truite, des nouveaux types de produits qui soient faciles à manipuler et à consommer, tout en conservant des propriétés nutritives proches de celles des produits de base.

### PRESENTATION DE L'INVENTION

Afin de répondre au moins partiellement à cette problématique, la présente invention propose un procédé de fabrication d'un produit alimentaire à base de poisson, comprenant les étapes suivantes :
- réalisation d'une mêlée par découpe et mélange de matière à l'aide d'un outil de découpe,
- ajout de texturant et d'eau dans la mêlée, et mélange,
- insertion de la mêlée dans une gaine au moyen d'un poussoir, la gaine présentant une direction longitudinale définissant sa longueur, et formant ainsi des boudins de poisson,
- cuisson par pasteurisation des boudins de poisson,
- retrait de la gaine,
- découpe des boudins en tranches,

La matière est par exemple composée de morceaux de saumon et/ou de pulpe de saumon et/ou de fibres de saumon.

La gaine est par exemple un boyau polyamide.

Le procédé peut également comprendre une étape d'ajout de sel dans la mêlée, et mélange préalablement à l'étape d'ajout de texturant et d'eau dans la mêlée, et/ou une étape d'ajout de composants aromatiques et/ou de colorants et/ou de conservateurs dans la mêlée, préalablement à son insertion dans la gaine.

L'étape de découpe réalise par exemple des tranches ayant une épaisseur comprise entre 1 et 3 mm, ou plus particulièrement entre 1,5 et 2,5 mm.

Le procédé peut comprendre d'autre part une étape de retrait de la gaine, suite à l'étape de cuisson, dans laquelle la gaine est retirée des boudins cuits.

Le procédé peut comprendre en outre une étape de découpe des boudins suite à l'étape de retrait de la gaine.

Le procédé peut comprendre au surplus une étape de refroidissement suite à l'étape de cuisson, dans laquelle les boudins sont refroidis à une température comprise entre 0 et 4°C, pendant une durée supérieure ou égale à 10h, ou typiquement supérieure ou égale à 12H.

La gaine est typiquement neutre colorée et/ou aromatisée.

L'étape de cuisson par pasteurisation comprend par exemple une étape de mise en régime, une étape palier, et une étape de refroidissement.

Le procédé peut comprendre en outre une étape de conditionnement des tranches sous forme de barquette.

Le procédé peut comprendre en outre une étape de traitement haute pression dans son conditionnement.

L'invention propose donc un produit à base de poisson mis sous la forme de tranches similaires à des tranches de jambon.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- La figure 1 représente schématiquement un procédé selon un aspect de l'invention,
- La figure 2 représente schématiquement un exemple de gaine telle qu'utilisée dans le procédé selon l'invention.

### DESCRIPTION DETAILLEE

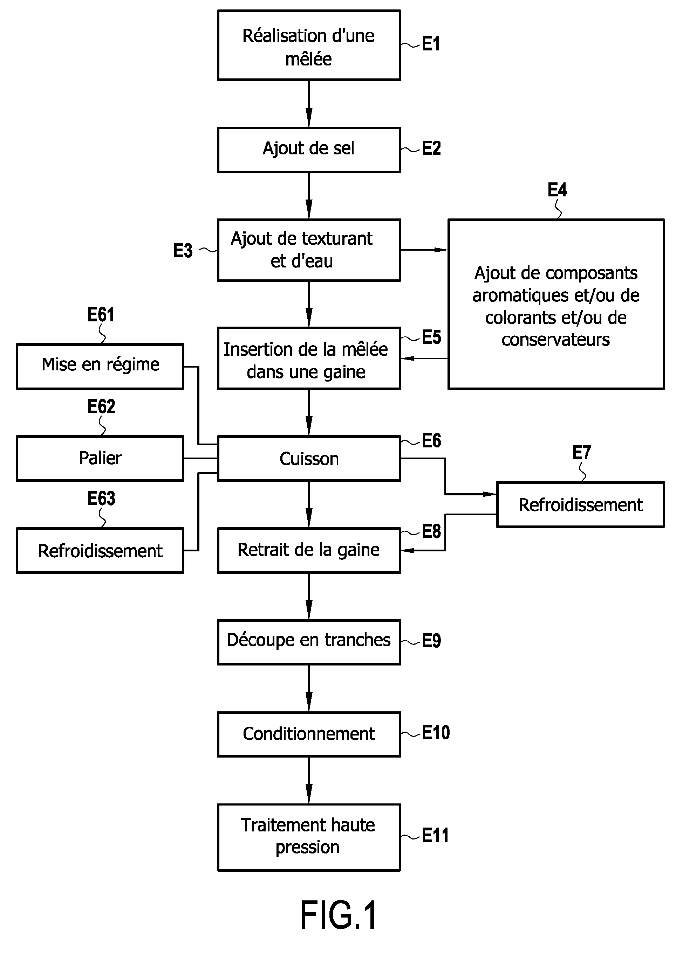

On illustre schématiquement sur la figure 1 un procédé selon un aspect de l'invention, pour la réalisation d'un produit alimentaire à base de poisson.

Comme illustré sur la figure 1, ce procédé comprend les étapes suivantes :
E1 : réalisation d'une mêlée par découpe et mélange de matière à l'aide d'un outil de découpe ;
E2 : étape optionnelle d'ajout de sel dans la mêlée, et mélange ;
E3 : ajout de texturant et d'eau dans la mêlée, et mélange ;
E4 : étape optionnelle d'ajout de composants aromatiques et/ou de colorants et/ou de conservateurs ;
E5 : insertion de la mêlée dans une gaine au moyen d'un poussoir, la gaine présentant une direction longitudinale définissant sa longueur, et formant ainsi des boudins de poisson ;
E6 : cuisson par pasteurisation des boudins de poisson ;
E7 : étape optionnelle de refroidissement ;
E8 : étape optionnelle de retrait de la gaine ;
E9 : étape optionnelle de découpe des boudins ;
E10 : étape optionnelle de conditionnement ;
E11 : étape optionnelle de traitement haute pression.

On détaille ci-après ces différentes étapes, en référence à la référence à la réalisation d'un produit à base de saumon. On comprend bien que l'utilisation du saumon n'a qu'une vocation à illustrer le procédé, et que le procédé peut être utilisé pour la réalisation de produits d'autres types de poissons, notamment le cabillaud, le colin, le flétan, le thon ou la truite.

### E1 : réalisation d'une mêlée par découpe et mélange de matière à l'aide d'un outil de découpe.

Cette première étape consiste à préparer la matière qui va servir de base pour la préparation du produit.
On découpe ainsi de la matière, par exemple des morceaux de saumon (par exemple de filet de saumon) et/ou de la pulpe de saumon et/ou des fibres de saumon (communément appelées « scraps » de saumon). Le saumon peut être du saumon fumé ou non. ou encore du saumon cru.
On peut également utiliser des morceaux et/ou de la pulpe et/ou des fibres d'autres poissons, tels que le cabillaud, le colin, le flétan, le thon ou la truite.

La matière est par exemple initialement congelée ou surgelée. Elle est alors décongelée en chambre froide, par exemple pendant une durée de l'ordre de 48h à une température comprise entre 0 et 4°C, ou en cellule de décongélation permettant de réaliser une décongélation plus rapide en moins de 48h.

La matière est ainsi typiquement amenée à une température comprise entre -4°C et +10°C, ou typiquement entre -2°C et +2°C pour sa découpe.

La découpe est réalisée au moyen d'un outil coupant, tel qu'un cutter ou un mélangeur muni d'un outil de coupe.

La finesse de la découpe peut être réglée en fonction de la finesse souhaitée pour le produit fini. Une découpe fine permettra en effet d'obtenir un produit fini sensiblement lisse, tandis qu'une découpe plus grossière conduira à la présence d'inclusions dans le produit fini.

La matière ainsi découpée et mélangée forme une mêlée.

### E2 : étape optionnelle d'ajout de sel dans la mêlée, et mélange.

Cette étape consiste à ajouter du sel dans la mêlée formée précédemment, et à mélanger l'ensemble afin de répartir le sel ainsi ajouté.

L'ajout de sel dans la mêlée a une action sur les protéines du poisson en solubilisant une partie des protéines, ce qui modifie la texture et la tenue du poisson, conférant ainsi une texture plus ferme et une présentation plus régulière.

### E3 : ajout de texturant et d'eau dans la mêlée, et mélange.

Cette étape consiste à ajouter des texturants puis de l'eau dans la mêlée.

Les texturants comprennent par exemple des protéines de soja et/ou du carraghènane et/ou du blanc d'oeuf et/ou des stabilisants tel que E452-E451 et/ou de l'amidon et/ou de la gélatine, ou encore une enzyme telle que le transglutaminase.

Cette étape permet de donner la texture souhaitée à la mêlée.

La mêlée est ensuite mélangée et/ou malaxée, par exemple de manière à former une émulsion afin d'obtenir un ensemble sensiblement homogène.

### E4 : étape optionnelle d'ajout de composants aromatiques et/ou de colorants et/ou de conservateurs.

Cette étape optionnelle consiste à ajouter des composants aromatiques (par exemple du poivre, du jus de citron, de l'échalote, ...) et/ou des colorants et/ou des conservateurs dans la mêlée.

### E5 : insertion de la mêlée dans une gaine au moyen d'un poussoir, la gaine présentant une direction longitudinale définissant sa longueur, et formant ainsi des boudins de poisson.

La mêlée est ensuite insérée dans une gaine au moyen d'un poussoir.
La gaine est par exemple un boyau en polyamide, muni de clips à ses deux extrémités, ou en polyester ou encore en fibres de collagène.
Le boyau polyamide peut être coloré et/ou aromatisé, afin de conférer une coloration et/ou un assaisonnement au contour du produit fini.

La gaine s'étend typiquement selon un axe longitudinal, et a une section généralement circulaire ou ovale.
L'insertion de la mêlée dans la gaine forme alors des boudins, qui sont placés dans un moule en vue de leur cuisson ultérieure.

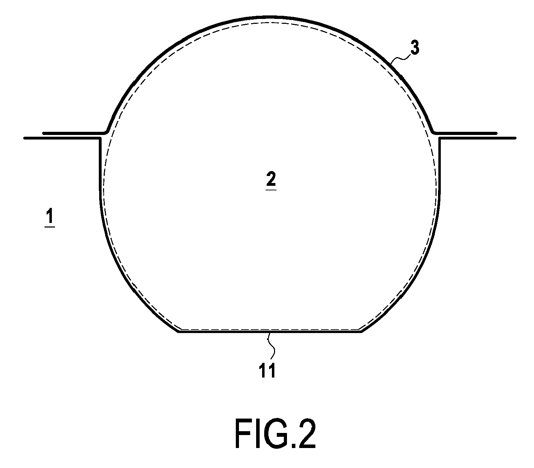

On représente sur la figure 2 un exemple de moule 1 vu en coupe, dans lequel on place un boudin 2 tel que décrit précédemment. L'ensemble est surmonté d'un couvercle 3 représenté schématiquement sur cette figure 2.
On voit sur cette figure que le moule 1 a ici une forme de cuvette présentant une base 11 plate.
Le boudin 2 disposé dans le moule 1 prend la forme du moule, du fait de la nature flexible de la gaine. Dans l'exemple représenté, le boudin prend donc une forme similaire à la forme d'une tranche de jambon.

### E6 : cuisson par pasteurisation des boudins de poisson.

Une fois les boudins formés et placés dans un moule, ils sont disposés dans un système de pasteurisation tel qu'un autoclave, puis soumis à un barème de pasteurisation.

La température de cuisson varie typiquement entre 70 et 95°C, et la durée de cuisson peut varier entre 1 heure et plusieurs heures, par exemple 3 heures.

A titre d'exemple, on peut réaliser les sous-étapes successives suivantes :
- E61 : Etape de mise en régime :
   o Cuisson à la vapeur à 45°C et à 0,2 bars, pendant une durée de 5 minutes, puis
   o Cuisson à la vapeur à 85°C et à 0,3 bars, pendant une durée de 15 minutes.
- E62 : Etape palier :
   o Cuisson à la vapeur à 85°C et à 0,3 bars, pendant une durée de 15 minutes.
- E63 : Etape de refroidissement :
   o Refroidissement à l'eau à 45°C et à 0,3 bars, pendant une durée de 15 minutes, puis
   o Refroidissement à l'eau à 25°C et à 0 bars, pendant une durée de 25 minutes, puis
   o Refroidissement à l'eau par force G à 0°C et à 0 bars ; en circulation continue pendant une durée de 20 minutes.

### E7 : étape optionnelle de refroidissement.

Une étape de refroidissement additionnelle peut alors être réalisée, par exemple par maintien des boudins cuits à une température comprise entre 0°C et 4°C pendant une durée de l'ordre de 24 heures, ou pendant plusieurs jours, par exemple en chambre froide.

### E8 : étape optionnelle de retrait de la gaine.

Une fois le boudin cuit, la gaine est retirée.

Dans le cas où la gaine est colorée et/ou aromatisée, l'étape de cuisson a conféré une même coloration et/ou un même assaisonnement au contour du boudin.

### E9 : étape optionnelle de découpe des boudins.

Le boudin est ensuite découpé, par exemple en tranches, par exemple au moyen d'un trancheur industriel. Les tranches sont typiquement découpées de manière à être perpendiculaires à l'axe du boudin, et présentent typiquement une épaisseur comprise entre 1 et 3 mm, ou plus précisément entre 1,5 et 2,5 mm, selon l'objectif de poids souhaité pour les tranches.
On peut par exemple réaliser des tranches répondant à la dénomination de « Grandes Tranches » pour des produits de la mer.
En variante, le boudin peut être découpé en dés, ou sous toute autre forme adaptée.

### E10 : étape optionnelle de conditionnement.

Une fois les boudins découpés (par exemple sous forme de tranches ou de dés), les produits ainsi obtenus sont conditionnés dans des barquettes, typiquement sous atmosphère modifiée, ou sous vide (communément sous forme de « SKIN pack » selon l'appellation commune en langue anglaise). Les barquettes sont ensuite fermées de manière hermétique, afin d'assurer la conservation du produit.

### E11 : étape optionnelle de traitement haute pression.

Afin d'améliorer la conservation du produit conditionné sous forme de barquette, une étape additionnelle de traitement haute pression du produit dans son conditionnement peut être réalisée.

Le « traitement haute pression » ou « étape de pasteurisation à froid par haute pression » consiste à appliquer au produit dans son conditionnement un couple pression/temps.
Les traitements subis dans le cadre de la présente invention varient de 3000 à 6000 bars pendant une durée de 3 à 5 minutes.
Ce traitement s'effectue à température entre 4 et 25°C, ou typiquement entre 8 à 16°C.
Une fois ce traitement effectué, le produit est ramené à une température inférieure à 4°C, afin d'éviter tout développement bactérien.

Le procédé tel que proposé permet ainsi de proposer du poisson sous une forme qui était à ce jour réservée aux produits à base de viande.

Cette nouvelle présentation pour le poisson est avantageuse en termes de manipulation pour l'utilisateur, et permet d'éviter les désagréments usuellement présents pour les produits à base de poisson, tels que les écoulements d'eau, les odeurs et la présence d'arrêtes.

Le procédé proposé permet d'obtenir un produit présentant une bonne cohésion, contrairement aux produits connus réalisés à base de poisson qui ont tendance à s'effriter lors du maniement par l'utilisateur, dont les différentes tranches restent séparées une fois conditionnées, et dont la texture est agréable pour l'utilisateur.

## Revendications

1. Procédé de fabrication d'un produit alimentaire à base de poisson comprenant les étapes suivantes :
- (E1) réalisation d'une mêlée par découpe et mélange de matière à l'aide d'un outil de découpe,
- (E3) ajout de texturant et d'eau dans la mêlée, et mélange,
- (E5) insertion de la mêlée dans une gaine (2) au moyen d'un poussoir, la gaine (2) présentant une direction longitudinale définissant sa longueur, et formant ainsi des boudins de poisson,
- (E6) cuisson par pasteurisation des boudins de poisson,

2. Procédé selon la revendication 1, dans lequel la matière est composée de morceaux de saumon et/ou de saumon et/ou de fibres de saumon.

3. Procédé selon la revendication 1, dans lequel la matière est composée de morceaux et/ou de pulpe et/ou de fibres de cabillaud, de colin, de flétan, de thon ou de truite.

4. Procédé selon l'une des revendications 1 à 3, dans lequel la gaine (2) est un boyau polyamide.

5. Procédé selon l'une des revendications 1 à 4, comprenant une étape (E2) d'ajout de sel dans la mêlée, et mélange, préalablement à l'étape (E3) d'ajout de texturant et d'eau dans la mêlée.

6. Procédé selon l'une des revendications 1 à 5, comprenant une étape (E4) d'ajout de composants aromatiques et/ou de colorants et/ou de conservateurs dans la mêlée, préalablement à son insertion dans la gaine (E5).

7. Procédé selon l'une des revendications 1 à 6, dans lequel l'étape de découpe (E9) réalise des tranches ayant une épaisseur comprise entre 1 et 3 mm, ou plus particulièrement entre 1,5 et 2,5 mm.

8. Procédé selon l'une des revendications 1 à 7, comprenant en outre une étape (E8) de retrait de la gaine, suite à l'étape de cuisson (E6), dans laquelle la gaine est retirée des boudins cuits.

9. Procédé selon la revendication 8, comprenant en outre une étape (E9) de découpe des boudins suite à l'étape (E8) de retrait de la gaine.

10. Procédé selon l'une des revendications 1 à 9, comprenant en outre une étape de refroidissement (E7) suite à l'étape de cuisson (E6), dans laquelle les boudins sont refroidis à une température comprise entre 0 et 4°C, pendant une durée supérieure ou égale à 10h.

11. Procédé selon l'une des revendications 1 à 10, dans lequel la gaine (2) est colorée et/ou aromatisée.

12. Procédé selon l'une des revendications 1 à 11, dans lequel l'étape de cuisson (E6) par pasteurisation comprend une étape de mise en régime (E61), une étape palier (E62), et une étape de refroidissement (E63).

13. Procédé selon l'une des revendications 1 à 12, comprenant en outre une étape (E10) de conditionnement des tranches sous forme de barquette.

14. Procédé selon la revendication 13, comprenant en outre une étape (E11) de traitement haute pression dans son conditionnement.

15. Produit alimentaire à base de poisson, obtenu par le procédé selon l'une des revendications 1 à 14.
